# EUROPÄISCHE PATENTSCHRIFT

(11) **EP 1 001 842 B1**
(45) Veröffentlichungstag und Bekanntmachung des Hinweises auf die Patenterteilung: **25.09.2002**
(21) Anmeldenummer: 98942657.2
(22) Anmeldetag: 30.07.1998
(51) Int. Cl.: B01F 15/02, B01F 15/04, G05D 11/02, G05D 11/03, F04B 13/02

(54) **MASCHINE ZUM FÜLLEN DER RANDFUGE VON ISOLIERGLASSCHEIBEN MIT EINER VERSIEGELUNGSMASSE AUS ZWEI KOMPONENTEN**
MACHINE FOR FILLING THE EDGE JOINTS OF INSULATING GLASS PANES WITH A SEALING COMPOUND CONSISTING OF TWO CONSTITUENTS
MACHINE POUR GARNIR LE JOINT MARGINAL DE VITRES ISOLANTES D'UNE MATIERE DE SCELLEMENT A BASE DE DEUX COMPOSANTS

(30) Priorität: 07.08.1997 DE 19734284; 18.08.1997 DE 19735622; 18.12.1997 DE 19756414
(43) Veröffentlichungstag der Anmeldung: 24.05.2000
(73) Patentinhaber: Lenhardt Maschinenbau GmbH, D-75242 Neuhausen-Hamberg (DE)
(72) Erfinder: LENHARDT, Karl, D-75242 Neuhausen-Hamberg (DE)
(74) Vertreter: Twelmeier, Ulrich, Dipl. Phys.
(86) Internationale Anmeldenummer: EP9804760
(87) Internationale Veröffentlichungsnummer: WO99007462

(56) Entgegenhaltungen:
- EP-A- 0 326 510
- EP-A- 0 336 138
- DE-A- 3 703 929
- DE-A- 3 937 900

## Beschreibung

Die Erfindung geht aus von einer Maschine mit den im Oberbegriff des Anspruchs 1 angegebenen Merkmalen. Eine solche Maschine ist bekannt aus der DE-AS-39 37 900. Die bekannte Maschine dient zum Versiegeln einer Isolierglasscheibe mit einer aus zwei Komponenten (Hauptkomponente und Nebenkompononte) bestehenden Klebe- und Dichtmasse. Jede der beiden Komponenten wird mit einer eigenen Pumpe aus einem Faß in einen Zwischenspeicher gefördert. Die Zwischenspeicher sind als Kolbenpumpen ausgebildet und speisen Zahnradpumpen, welche die beiden Komponenten einem statischen Mischer zuführen, an dessen Ende sich eine Düse befindet. Für die Hauptkomponente ist sogar eine Anordnung von zwei aufeinanderfolgenden Zahnradpumpen vorgesehen. Die Anordnungen aus Kolbenpumpen und Zahnradpumpen sind stationär angeordnet und über beheizte Druckschläuche sowie über beheizte Gelenkrohre mit der Anordnung aus Mischer und Düse verbunden, die den Rand einer Isolierglasscheibe zum Zwecke des Versiegeln abfährt. Diese Leitungen bewirken einen beträchtlichen Druckverlust und erfordern im Hinblick auf die hohe Viskosität (250 - 400 Pas) der Komponenten extrem hohe Drücke bis zu 400 bar an den Ausgängen der Pumpen. Das zieht weitere Nachteile nach sich: Dehnungen in den Leitungen und die Kompressibilität der zu fördernden Massen bewirken Dosierungenauigkeiten; die Konstruktionsteile, die dem Massefluß ausgesetzt sind, unterliegen einem erhöhten Verschleiß; das gilt insbesondere für die Zahnradpumpen und kann bei den Zweikomponentenklebern, die für das Versiegeln an Isolierglasscheiben üblicherweise verwendet werden, durch abrasive Füllstoffe drastisch verschärft werden, daß die Lebensdauer unzureichend ist.

Um dem Verschleiß an den Zahnradpumpen zu entgehen, ist es bekannt, Zweikomponentenkleb- und Dichtstoffe für das Versiegeln von Isolierglasscheiben statt dessen mit Hilfe von Kolbenpumpen zu dosieren (DE-A-37 03 929), welche aus einem Zwischenspeicher gespeist werden, welche seinerseits von einer Faßpumpe aus einem Vorratsbehälter (Faß) für die jeweiligen Komponenten gespeist werden. Auch in diesem Fall sind die hydraulisch angetriebenen Kolbenpumpen stationär angeordnet und speisen die Anordnung aus Mischer und Düse über beheizte Druckschläuche oder beheizte Gelenkrohre mit den bereits geschilderten Nachteilen für die Dosiergenauigkeit. Die Anordnung aus den Kolbenpumpen, Zwischenspeichern und den hydraulischen Antrieben wiegt ca. 600 kg und kann unmöglich zusammen mit einer Düse bewegt werden.

Aus der DE-A-39 13 000 ist es bereits bekannt, einen Pufferbehälter für eine hochviskose, pastöse, kompressible Substanz nahe bei einer Düse anzuordnen, welcher diese Substanz aus dem Pufferbehälter zugeführt wird. Das Dosieren der Substanz erfolgt jedoch nicht volumetrisch, sondern druckabhängig, indem die Substanz, die beispielsweise mittels einer stationären Kolbenpumpe durch den Pufferbehälter hindurch zur Düse gefördert wird, im Pufferbehälter unter einen konstant geregelten Druck gesetzt wird, was im Bereich zwischen dem Pufferbehälter und der Düse einen Drucksensor erfordert, der Bestandteil eines Druckregelkreises ist. Nachteilig dabei ist, daß Schwankungen der Materialzusammensetzung, der Temperatur und der Viskosität, des Vernetzungsgrades von 2-Komponentenmischungen etc. zu Dosierungenauigkeiten führen, die einer druckgeregelten Dosierung immanent sind

Aus der EP-0 709 144 A1 ist eine Vorrichtung mit den Merkmalen des Oberbegriffs des Anspruchs 1 bekannt, in welcher als Zwischenspeicher für die jeweilige Komponente ein Behälter dient, welcher durch eine Membran in zwei Kammern unterteilt ist, von denen die eine zur Aufnahme der betreffenden Komponente dient und die andere mittels einer Hydraulikpumpe als volumetrisch dosierender Pumpe mit Hydraulikflüssigkeit beaufschlagbar ist, wodurch die in den Behälter strömende Hydraulikflüssigkeit eine entsprechende Menge der betreffenden Komponente der Versiegelungsmasse verdrängt. Die beiden getrennten, für die zwei Komponenten der Versiegelungsmasse vorgesehenen Zwischenbehälter werden von ein und derselben Hydraulikpumpe über getrennt angesteuerte Proportionalventile mit der Hydraulikflüssigkeit beaufschlagt. Die Zwischenspeicher können dabei zwar zusammen mit den Proportionalventilen, mit dem Mischer und der Düse auf einem gemeinsamen Träger angeordnet sein, nicht jedoch die für den Dosiervorgang erforderliche Hydraulikpumpe, welche stationär angeordnet und über einen Hydraulikschlauch mit den Proportionalventilen verbunden ist. Ein Nachteil dieser bekannten Vorrichtung liegt darin, daß die Regelventile nicht in der Lage sind, die raschen Änderungen der Förderrate an Versiegelungsmasse genau genug in der benötigten Schnelligkeit auszuführen. Ein weiteres Problem besteht darin, daß der erforderliche hohe Auspreßdruck bei geringen Förderleistungen schwierig einzuhalten ist (EP 0 445 101 B1).

Aus der FR-2,597,025 A wird eine Vorrichtung zum Auftragen eines Stranges aus einem einkomponentigen Kleber auf ein Werkstück beschrieben, welche eine Kolbenpumpe hat, die über einen Spindelantrieb von einem Motor angetrieben wird. Am Zylinder der Kolbenpumpe ist im Bereich vor deren Kammer ein Drucksensor vorgesehen. Um die aus der Düse austretende Menge an Klebstoff zu steuern, wird bei der FR-2,597,025 A die Drehzahl des Motors über eine Steuerung auf den gewünschten Wert eingestellt.

Weitere Nachteile der aus der EP 0 709 144 und DE-37 03 929 A1 bekannten Vorrichtungen bestehen darin, daß das Hydraulikaggregat, welches die Dosierpumpen antreibt, während des Betriebes der Vorrichtungen permanent zugeschaltet sein muß, so daß auch dann, wenn gerade keine Isolierglasscheibe versiegelt wird, Energie verbraucht, Wärme erzeugt und Lärm entwickelt wird. Außerdem ist die Menge der Komponenten, welche sich vor dem jeweiligen Förderglied der Dosierpumpen befindet (der Kolben bei einer Kolbenpumpe bzw. die Membran in dem Speicherbehälter gemäß EP 0 709 144 A1) veränderlich, wodurch die Randbedingungen für das Dosieren und die Dosiergenauigkeit von der momentanen Menge der Komponenten zwischen der Düse und dem Förderglied abhängen, was insbesondere bei der zäheren Hauptkomponente von Nachteil ist, weil diese typisch etwa 90 % der Versiegelungsmasse ausmacht und obendrein im Falle der üblichen Verwendung eines Thiokols als Versiegelungsmasse tixotrop ist.

Der Erfindung liegt die **Aufgabe** zugrunde, eine Maschine der eingangs genannten Art zu schaffen, mit welcher die beim Füllen der Randfuge von Isolierglasscheiben in der Zeiteinheit aus der Düse austretende Menge an Versiegelungsmasse genauer und rascher gesteuert werden kann.

Diese Aufgabe wird gelöst durch eine Maschine mit den im Anspruch 1 angegebenen Merkmalen. Vorteilhafte Weiterbildungen der Erfindung sind Gegenstand der Unteransprüche.

Erfindungsgemäß wird für die zähere Hauptkomponente der Versiegelungsmasse eine mittels eines Servomotors angetriebene Zahnradpumpe als Dosierpumpe verwendet, wo hingegen für die weniger zähe Nebenkomponente der Versiegelungsmasse als Dosierpumpe eine Kolbenpumpe eingesetzt wird, deren Kolben durch einen zweiten Servomotor angetrieben ist. Dabei sind beide Dosierpumpen synchronisiert und einschließlich ihrer Antriebe gemeinsam mit der Düse und dem Mischer zu einer Baugruppe zusammengefaßt, welche als Ganzes beweglich am Gestell der Maschine angebracht ist. Aus Gründen der Dosiergenauigkeit wird als Kolbenpumpe eine Plungerpumpe bevorzugt.

Die erfindungsgemäße Merkmalskombination hat wesentliche Vorteile:
◆ Das Zusammenfassen von Düse, Mischer und Dosierpumpen zu einer Baugruppe, welche als Ganzes beweglich an der Maschine angebracht ist, ermöglicht kürzeste Leitungen und geringste Materialvolumina auf dem Weg von den Dosierpumpen zur Düse, welche beim Versiegeln von Isolierglasscheiben an deren Randfuge entlangbewegt wird.
◆ Die kurzen Leitungswege und die geringen darin enthaltenen Materialmengen haben zur Folge, daß trotz der hohen Zähigkeit der zu fördernden Komponente die Förderdrücke so niedrig sein können daß ein Hydraulik- aggregat für das Dosieren nicht mehr erforderlich ist. Das schafft die Voraussetzung dafür,
◆ daß die Dosierpumpen und die ihnen zugeordneten Zwischenspeicher mit dem Mischer und der Düse zu einer gemeinsam beweglichen Baugruppe zusammengefaßt werden können, was in Weiterbildung der Erfindung besonders bevorzugt und vorteilhaft ist. Die Zwischenspeicher selbst stehen dem nicht entgegen, da sie keinesfalls mehr Material enthalten müssen, als zum Versiegeln einer Isolierglasscheibe erforderlich ist. Die Speichermenge kann sogar geringer sein, wenn man dafür sorgt, daß der betreffende Zwischenspeicher während des Versiegelns einer Isolierglasscheibe nachgefüllt werden kann. Zu diesem Zweck ist der Zwischenspeicher für die zähere Hauptkomponente vorzugsweise ein Kolben-Zylinder-Aggregat, dessen Kolben unter einem verhältnismäßig geringen Druck von nicht mehr als 20 bis 30 bar steht, welcher nicht hydraulisch aufgebracht werden muss, sondern pneumatisch aufgebracht werden kann. Entgegen diesem Vordruck kann die zähere Hauptkomponente aus ihrem Vorratsbehälter laufend in den Zylinder des Kolben-Zylinder-Aggregate nachgefüllt werden. Zu diesem Zweck kann man die das Nachfüllen bewirkende Pumpe durch zwei Lagesensoren (Positionsschalter) steuern, von denen einer auf eine vordere Position des Kolbens und einer auf eine hintere Position des Kolbens anspricht. Der vordere Positionsschalter wird so angeordnet, daß er anspricht, wenn der Zylinder fast leer ist, und der hintere Positionsschalter wird so angeordnet, daß er anspricht wenn der Zylinder fast voll ist. Spricht der vordere Positionsschalter auf den Kolben an, wird die Pumpe, welche die zähere Hauptkomponente aus dem Vorratsbehälter nachfüllt, eingeschaltet, spricht der hintere Positionsschalter an, wird die Pumpe wieder ausgeschaltet.
◆ Auf diese Weise kann die Zahnradpumpe unterbrechungslos dosieren und erhält obendrein von dem als Zwischenspeicher für die Hauptkomponente dienenden Kolben-Zylinder-Aggregat noch einen Vordruck, der das Erreichen einer hohen Dosiergenauigkeit begünstigt.
◆ Da die Nebenkomponente größenordnungsmäßig nur 1/10 der Menge der Versiegelungsmasse ausmacht, genügt es, als Zwischenspeicher für die Nebenkomponente den Zylinder der vorzugsweise als Plungerpumpe ausgebildeten Kolbenpumpe selbst zu verwenden, so daß ein gesonderter Zwischenspeicher für die Nebenkomponente entbehrlich ist. Das macht die Dosiereinrichtung für die Nebenkomponente besonders leicht und kompakt.
◆ Die von den Dosierpumpen bewegte Menge an Versiegelungsmasse ist verhältnismäßig gering. Das ermöglicht schnelle Änderungen der Förderrate, wodurch sich die Qualität der Versiegelung von von Isolierglasscheiben verbessern und die Versiegelungsgeschwindigkeit erhöhen läßt. Auf Änderungen des Querschnittes der zu füllenden Randfuge kann erfindungsgemäß schneller reagiert werden als beim Stand der Technik. Ein weiterer Vorteil der geringen Menge an Versiegelungsmasse zwischen den Dosiereinheiten und der Düse liegt darin, daß nur noch verhältnismäßig geringe Drücke für das Auspressen der Komponenten benötigt werden. Im Normalfall genügen Drücke von 150 bis 200 bar, wohingegen beim Stand der Technik Drücke bis 400 bar auftreten konnten. Das ermöglicht nicht nur eine leichtere Bauweise und schwächere, reaktionsschnellere Antriebe, sondern verringert auch den schädlichen Einfluß der Kompressibilität und der Tixotropie auf die Dosiergenauigkeit.
◆ Unabhängig vom Füllgrad des Zwischenspeichers ist die Menge an Versiegelungsmasse zwischen den Dosiereinheiten und der Düse praktisch konstant, so daß die Dosiergenauigkeit praktisch unabhängig ist vom Füllgrad des Zwischenspeichers.
◆ Schnellere Reaktionszeiten führen dazu, daß beim Start des Versiegelungsvorgangs eine stationäre Förderrate schneller erreicht wird. Ein vorheriger Druckaufbau, wie er bei hydraulischen Dosierpumpen üblich ist, ist erfindungsgemäß nicht erforderlich.
◆ Die besonders genaue und reaktionsschnelle Arbeitsweise der Erfindung ermöglicht es, die Versiegelungsmasse entsprechend einem zuvor errechneten, zeitlich veränderlichen Bedarf oder entsprechend einem durch Meßfühler, welche die Randfuge der Isolierglasscheibe abtasten, ermittelten Bedarf zu dosieren, wohingegen beim Stand der Technik weitgehend mit Erfahrungswerten gerechnet werden mußte, weil der Dosiervorgang nicht berechenbaren Einflüssen unterlag.
◆ Da rein volumetrisch dosiert wird, beeinflussen Temperaturschwankungen anders als beim Stand der Technik den Dosiervorgang nicht. Eine temperaturgeregelte Kabine, welche im Stand der Technik gebräuchlich ist, um den Temperatureinfluß auf die Dosiergenauigkeit auszuschalten, wird erfindungsgemäß nicht benötigt.
◆ Die höhere Reaktionsgeschwindigkeit der Dosiereinheiten ermöglicht darüberhinaus ein rascheres Beenden des Dosiervorganges.
◆ Da die Übergangsphasen zwischen dem stationären Dosiervorgang und dessen Start und Stop (die sogenannten Rampen) kürzer sind, kann in diesen Phasen auch das Mischungsverhältnis zwischen Haupt- und Nebenkomponente leichter konstant gehalten werden.
◆ An die Pumpen und Förderleitungen von den Vorratsbehältem zu den Zwischenspeichern müssen keine besonderen Anforderungen gestellt werden außer der, daß der Druck ausreicht, um die Komponenten in die Zwischenspeicher zu fördern.
◆ Mit den elektrischen Servomotoren läßt sich nicht nur die Förderrate, sondern auch das Mischungsverhältnis der Komponenten leicht und reproduzierbar verändern. Bei hydraulischen Kolbenpumpen erforderte das Ändern des Mischungsverhältnisses eine mechanische Veränderung von Hebelgelenken. Bei Zahnradpumpen, die im Stand der Technik mit hohem Förderdruck arbeiten mußten, war eine definierte Änderung des Mischungsverhältnisses schwieriger, weil die Förderrate vom Förderdruck, der Viskosität und dem Vordruck der Pumpe abhängen.
◆ Wegen des niedrigeren Förderdruckes ist der Verschleiß der Zahnradpumpe geringer als im Stand der Technik. Abrasive Inhaltsstoffe, welche in der Nebenkomponente enthalten sein können, bringen keine Verschleißprobleme mit sich, weil die zu ihrer Dosierung verwendete Plungerpumpe verschleißunempfindlich ist.

Weitere Vorteile und Merkmale der Erfindung ergeben sich aus der nachstehenden Beschreibung eines Ausführungsbeispiels.

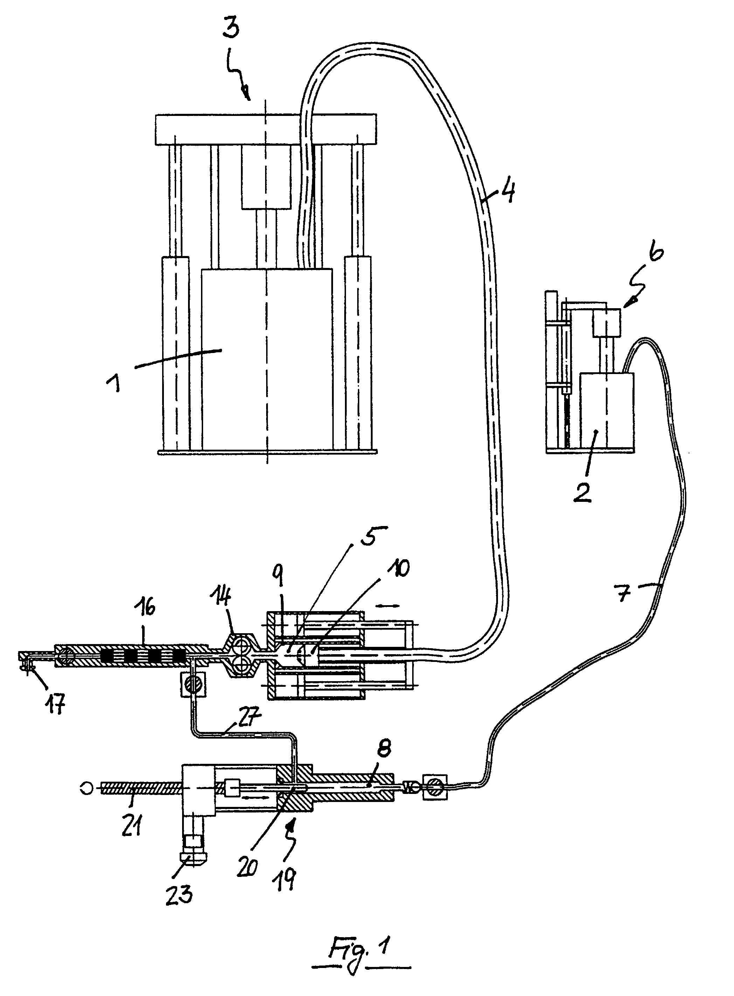

- Figur 1: zeigt eine erfindungsgemäße Dosiereinrichtung teilweise im Schnitt, und

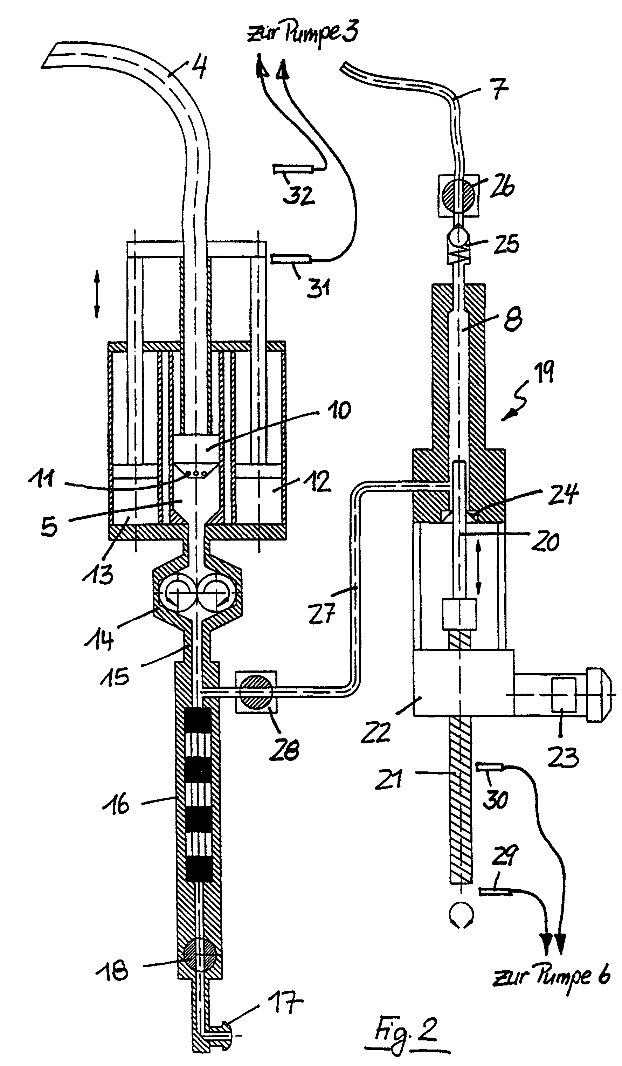

- Figur 2: zeigt als Detail die Anordnung aus Dosierpumpen, Zwischenspeicher, Mischer und Düse aus Figur 1 vergrößert im Schnitt.

Die Vorrichtung besteht aus einem ersten Faß 1 für die Hauptkomponente und einem zweiten Faß 2 für die Nebenkomponente einer Versiegelungsmasse für Isolierglasscheiben, vorzugsweise auf der Grundlage von Thiokol (ein Polysulfid). Aus dem Faß 1 wird die Hauptkomponente mittels einer Faßpumpe 3, deren Aufbau im Stand der Technik bekannt ist, durch einen Druckschlauch 4 in einen Zwischenspeicher 5 gefördert. Aus dem Faß 2 wird die Nebenkomponente durch eine Faßpumpe 6, deren Aufbau ebenfalls im Stand der Technik bekannt ist, durch einen Druckschlauch 7 in einen zweiten Zwischenspeicher 8 gepumpt.

Der Zwischenspeicher 5 für die Hauptkomponente ist der Zylinder einer Kolben-Zylinder-Einheit 9, in welche die Hauptkomponente durch den Kolben 10, welcher zu diesem Zweck einen oder mehrere Durchgänge 11 hat, hineingepumpt wird. In dem Zwischenspeicher 5 steht die Hauptkomponente unter einem Vordruck, welcher durch zwei pneumatische Kolben-Zylinder-Einheiten 12 und 13 ausgeübt wird, indem diese auf den Kolben 10 einwirken. Unmittelbar vor dem Auslaß des Zwischenspeichers 5 ist eine Zahnradpumpe 14 vorgesehen, welche von einem regelbaren Servomotor angetrieben ist. Der Ausgang der Zahnradpumpe 14 ist unmittelbar oder über ein sehr kurzes Leitungsstück 15 mit einem statischen Mischer 16 verbunden, welcher in eine Düse 17 mündet, wobei zwischen dem statischen Mischer 16 und der Düse 17 noch ein Drehschieber 18 vorgesehen ist, welcher es gestattet, die Düse 17 abzusperren.

Die Faßpumpe 6 pumpt die Nebenkomponente durch einen Druckschlauch 7 in den zweiten Zwischenspeicher 8, bei welchem es sich um den Zylinder einer Plungerpumpe 19 handelt, deren Tauchkolben 20 (Plunger) an einer Spindel 21 angebracht ist, welche in einer Spindelmutter steckt, welche in einem Getriebegehäuse 22 untergebracht ist und durch einen regelbaren Servomotor 23 angetrieben wird. Der Plunger 20 durchsetzt eine Abstreifdichtung 24 am einen Ende des Zylinders 8. Am gegenüberliegenden Ende des Zylinders 8 befindet sich der Einlaß für die Nebenkomponente, welche über ein Rückschlagventil 25 und einen Drehschieber 26 eingespeist wird. Seitlich an der Plungerpumpe 19 befindet sich deren Auslaß, welcher durch eine Leitung 27 mit dem Einlaß des statischen Mischers 16 verbunden ist, wobei sich dicht vor dem statischen Mischer ein weiterer Drehschieber 28 befindet.

Zum Füllen des Zwischenspeichers 8 wird die Faßpumpe 6 eingeschaltet; sie fördert die Nebenkomponente durch den geöffneten Drehschieber 26 und durch das in dieser Richtung offene Rückschlagventil 25 in den zylindrischen Zwischenspeicher 8. Der Füllgrad im Zwischenspeicher 8 kann aus der Stellung des Plungers 20 abgeleitet werden, welche zu diesem Zweck durch zwei Lagesensoren 29 und 30 überwacht wird, welche die Pumpe 6 steuern. Befindet sich der Plunger fast in seiner vorderen Endstellung, spricht der Lagesensor 30 an und schaltet die Pumpe 6 ein. Während des folgenden Nachfüllvorgangs wird der Plunger 20 zurückbewegt, vorzugsweise dadurch, daß die Spindel 21 vom Servomotor 23 entkoppelt wird, so daß der Plunger 20 durch die über den Druckschlauch 7 einströmende Nebenkomponente zurückgedrängt wird. Hat der Plunger 20 fast seine zurückgezogene Endstellung erreicht, spricht der Lagesensor 29 an und schaltet die Pumpe 6 wieder ab. Ein solcher Nachfüllvorgang kann in der Arbeitspause zwischen dem Versiegeln zweier aufeinanderfolgender Isolierglasscheiben ablaufen. Kurzzeitige Nachfüllvorgänge können auch ablaufen, wenn die Düse 17 an einer Ecke einer Isolierglasscheibe ankommt und der Versiegelungsvorgang dort kurzzeitig unterbrochen wird. Zum Dosieren der Nebenkomponente treibt der Servomotor 23 nach Vorgaben gesteuert oder geregelt den Plunger 20 in den Zylinder 8 und verdrängt dabei ein definiertes Volumen der Nebenkomponente, welche über die Leitung 27 in den statischen Mischer 16 strömt. Synchron mit dem Servomotor 23 wird die Zahnradpumpe 14 angetrieben und fördert ein definiertes Volumen der Hauptkomponente aus dem Zwischenspeicher 5 in den statischen Mischer 16, wobei der Fördervorgang der Zahnradpumpe 14 durch den im Zwischenspeicher 5 herrschenden Vordruck unterstützt wird. Kommt der Kolben 10 in die Nähe seiner vorderen Endstellung, spricht ein ihm zugeordneter Lagesensor 31 an und schaltet die Faßpumpe 3 ein, welche nun unter Überwindung des im Zwischenspeicher 5 herrschenden Vordruckes die Hauptkomponente in den Zwischenspeicher nachfüllt, wobei der Kolben 10 zurückweicht. Gelangt der Kolben 10 in die Nähe seiner hinteren Endstellung, spricht ein weiterer Lagesensor 32 an und schaltet die Faßpumpe 3 wieder ab. Auf diese Weise kann die Hauptkomponente unterbrechungslos dosiert werden. In Betriebspausen können die Drehschieber 18, 26 und 28 abgesperrt werden.

Die Anordnung aus der Düse 17, dem statischen Mischer 16, der Zahnradpumpe 14 samt dem ihr zugeordneten Zwischenspeicher 5 und die Plungerpumpe 19 mit integriertem Zwischenspeicher 8 bilden eine Baugruppe, welche auf einem gemeinsamen Träger angeordnet sein kann und gemeinsam bewegt werden kann, wenn die Düse 17 entlang des Randes einer Isolierglasscheibe bewegt wird, wozu diese Baugruppe beweglich am Gestell einer Versiegelungsmaschine angebracht ist, daran auf und ab beweglich und mindestens die Düse auch noch verschwenkbar gelagert ist, wie es beispielsweise in der EP-A-0 709 144 am Beispiel einer zum Stand der Technik zählenden Maschine zum Versiegeln von Isolierglas beschrieben ist.

## Patentansprüche

1. Maschine zum Füllen der Randfuge von Isolierglasscheiben mit einer zähflüssigen bis pastösen Versiegelungsmasse, welche aus einer Hauptkomponente und aus einer Nebenkomponente besteht, welche sich chemisch und in ihrer Zähigkeit unterscheiden, mit zwei Pumpen (3, 6) und mit getrennten Zwischenspeichem (5, 8), in welche die zwei Pumpen (3, 6) die beiden Komponenten aus zwei Vorratsbehältem (1, 2) fördern,
und mit getrennten, volumetrisch dosierenden, synchron angetriebenen Dosierpumpen (14, 19), welche die Komponenten in vorgegebenem Mengenverhältnis in einen Mischer (16) und weiter zu einer Düse (17) fördern,
wobei die Düse (17) und der Mischer (16) einer Baugruppe angehören, welche als Ganzes beweglich an einem Gestell der Maschine angebracht ist, **gekennzeichnet durch** eine mittels eines Servomotors angetriebene Zahnradpumpe (14) als Dosierpumpe für die Hauptkomponente in Kombination mit einer Kolbenpumpe (19) als Dosierpumpe für die Nebenkomponente, deren Kolben (20) **durch** einen zweiten Servomotor (23) angetrieben ist, welche gemeinsam der beweglichen Baugruppe angehören.

2. Maschine nach Anspruch 1, **dadurch gekennzeichnet, daß** der Zwischenspeicher (8) für die Nebenkomponente der Baugruppe angehört, welche als Ganzes beweglich an dem Gestell der Maschine angebracht ist.

3. Maschine nach Anspruch 1 oder 2, **dadurch gekennzeichnet, daß** der Kolben (20) der Kolbenpumpe (19) über ein Spindelgetriebe (21,22) angetrieben ist.

4. Maschine nach Anspruch 3, **dadurch gekennzeichnet, daß** der Zylinder der Kolbenpumpe (19) als Zwischenspeicher (8) für die Nebenkomponente dient.

5. Maschine nach einem der Ansprüche 1 bis 4, **dadurch gekennzeichnet, daß** die dem Vorratsbehälter (2) für die Nebenkomponente zugeordnete Pumpe (6) die Nebenkomponente direkt in den Zylinder der Kolbenpumpe (19) fördert.

6. Maschine nach einem der vorstehenden Ansprüche, **dadurch gekennzeichnet, daß** die Kolbenpumpe (19) eine Plungerpumpe ist.

7. Maschine nach einem der Ansprüche 1 bis 6, **dadurch gekennzeichnet, daß** der Zwischenspeicher (5) für die Hauptkomponente der Baugruppe angehört, welche als Ganzes beweglich an dem Gestell der Maschine angebracht ist.

8. Maschine nach Anspruch 7, **dadurch gekennzeichnet, daß** die dem Vorratsbehälter (1) für die Hauptkomponente zugeordnete Pumpe (3) die Hauptkomponente unmittelbar in den der Zahnradpumpe (14) zugeordneten Zwischenspeicher (5) fördert, welcher dicht vor dem Eingang der Zahnradpumpe (14) liegt.

9. Maschine nach einem der vorstehenden Ansprüche, **dadurch gekennzeichnet, daß** der Zwischenspeicher (5) für die Hauptkomponente unter einem Vordruck steht.

10. Maschine nach einem der vorstehenden Ansprüche, **dadurch gekennzeichnet, daß** der Zwischenspeicher (5) für die Hauptkomponente laufend nachfüllbar ausgebildet ist.

11. Maschine nach einem der vorstehenden Ansprüche, **dadurch gekennzeichnet, daß** der Zwischenspeicher (5) für die Hauptkomponente ein Kolben-Zylinder-Aggregat ist.

12. Maschine nach einem der vorstehenden Ansprüche, **dadurch gekennzeichnet, daß** die Zahnradpumpe (14) unmittelbar vor dem Eingang des Mischers (16) angeordnet ist.

13. Maschine nach einem der vorstehenden Ansprüche, **dadurch gekennzeichnet, daß** die Kolbenpumpe (14) unmittelbar vor dem Eingang des Mischers (16) angeordnet ist.

14. Maschine nach einem der vorstehenden Ansprüche, **dadurch gekennzeichnet, daß** der Zwischenspeicher (5) für die Hauptkomponente unmittelbar vor der Zahnradpumpe (14) angeordnet ist.

15. Maschine nach einem der vorstehenden Ansprüche, **dadurch gekennzeichnet, daß** die Düse (17) unmittelbar nach dem Ausgang des Mischers (16) angeordnet ist.

## Claims

1. A machine for filling the edge joint of insulating glass panes with a semiliquid to paste-like sealing compound, consisting of a main constituent and a secondary constituent, which are different in chemical terms and in terms of their viscosity, having two pumps (3, 6) which convey the two constituents from two reservoirs (1, 2) into separate intermediate storage chambers (5, 8), and having separate, synchronously driven metering pumps (14, 19), which are metering volumetrically, for conveying the constituents in a predetermined mass ratio to a mixer (16) and then on to a nozzle (17), the nozzle and the mixer belonging to a sub-assembly which is movably mounted, in its entirety, on a frame of the machine,
**characterized by** a gear pump (14), driven by a servomotor, as metering pump for the main constituent in combination with a piston pump (19), which serves as a metering pump for the secondary constituent and whose piston (20) is driven by a second servomotor (23), both of which are part of the movable sub-assembly.

2. The machine as defined in Claim 1, **characterized in that** the intermediate storage chamber (8) for the secondary constituent is part of the sub-assembly which is movably mounted, in its entirety, on the frame of the machine.

3. The machine as defined in Claim 1 or Claim 2, **characterized in that** the piston (20) of the piston pump (19) is driven via a spindle drive (21, 22).

4. The machine as defined in Claim 3, **characterized in that** the cylinder of the piston pump (19) serves as the intermediate storage chamber (8) for the secondary constituent.

5. The machine as defined in one of Claims 1 through 4, **characterized in that** the pump (6) associated to the reservoir (2) for the secondary constituent conveys the secondary constituent directly into the cylinder of the piston pump (19).

6. The machine as defined in one of the preceding claims, **characterized in that** the piston pump (19) is a plunger pump.

7. The machine as defined in one of Claims 1 through 6, **characterized in that** the intermediate storage chamber (5) for the main constituent is part of the sub-assembly which is movably mounted, in its entirety, on the frame of the machine.

8. The machine as defined in Claim 7, **characterized in that** the pump (3) associated to the reservoir (1) for the main constituent conveys the main constituent directly into the intermediate storage chamber (5) associated to the gear pump (14), which is located immediately upstream of the inlet of the gear pump (14).

9. The machine as defined in one of the preceding claims, **characterized in that** the intermediate storage chamber (5) for the main constituent is subjected to a pre-pressure.

10. The machine as defined in one of the preceding claims, **characterized in that** the intermediate storage chamber (5) for the main constituent is designed to permit continuous refilling.

11. The machine as defined in one of the preceding claims, **characterized in that** the intermediate storage chamber (5) for the main constituent is a piston-cylinder unit.

12. The device as defined in one of the preceding claims, **characterized in that** the gear pump (14) is arranged immediately upstream of the inlet of the mixer (16).

13. The device as defined in one of the preceding claims, **characterized in that** the piston pump (14) is arranged immediately upstream of the inlet of the mixer (16).

14. The device as defined in one of the preceding claims, **characterized in that** the intermediate storage chamber (5) for the main constituent is arranged immediately upstream of the gear pump (14).

15. The device as defined in one of the preceding claims, **characterized in that** the nozzle (17) is arranged immediately downstream of the outlet of the mixer (16).

## Revendications

1. Machine pour le remplissage de joints périphériques de pans de verre isolant avec une matière d'étanchéisation visqueuse à pâteuse qui est constituée par un composant principal et par un composant secondaire qui se distinguent l'un de l'autre du point de vue chimique et en ce qui concerne leur viscosité, comprenant deux pompes (3, 6) et des réservoirs intermédiaires séparés (5, 8), dans laquelle les deux pompes (3, 6) transportent les deux composants à partir de deux récipients de réserve (1, 2), et comprenant des pompes de dosage séparées (14, 19), entraînées de manière synchrone et procurant un dosage volumétrique, qui transportent les composants dans des proportions prédéfinies dans un mélangeur (16) et ultérieurement jusqu'à une buse, la buse (17) et le mélangeur (16) faisant partie d'un groupe de montage qui est appliqué de façon à se déplacer dans son ensemble sur le bâti de la machine, **caractérisée par** une pompe à engrenages (14) entraînée par un servomoteur, à titre de pompe de dosage pour le composant principal en combinaison avec une pompe à piston (19) à titre de pompe de dosage pour le composant secondaire dont le piston (20) est entraîné par un deuxième servomoteur (23), qui font partie ensemble du groupe de montage mobile.

2. Machine selon la revendication 1, **caractérisée en ce que** le réservoir intermédiaire (8) pour le composant secondaire appartient au groupe de montage qui est appliqué de façon à se déplacer dans son ensemble sur le bâti de la machine.

3. Machine selon la revendication 1 ou 2, **caractérisée en ce que** le piston (20) de la pompe à piston (19) est entraîné par un engrenage à broche (21, 22).

4. Machine selon la revendication 3, **caractérisée en ce que** le cylindre de la pompe à piston (19) fait office de réservoir intermédiaire (8) pour le composant secondaire.

5. Machine selon l'une quelconque des revendications 1 à 4, **caractérisée en ce que** la pompe (6) attribuée au récipient de réserve (2) pour le composant secondaire transporte le composant secondaire directement dans le cylindre de la pompe à piston (19).

6. Machine selon l'une quelconque des revendications précédentes, **caractérisée en ce que** la pompe à piston (19) est une pompe à piston-plongeur.

7. Machine selon l'une quelconque des revendications 1 à 6, **caractérisée en ce que** le réservoir intermédiaire (5) pour le composant principal fait partie du groupe de montage qui est appliqué de façon à se déplacer dans son ensemble sur le bâti de la machine.

8. Machine selon la revendication 7, **caractérisée en ce que** la pompe (3) attribuée au récipient de réserve (1) pour le composant principal transporte le composant principal directement dans le réservoir intermédiaire attribué à la pompe à engrenages (14), qui est disposé de manière étanche devant l'entrée de la pompe à engrenage (14).

9. Machine selon l'une quelconque des revendications précédentes, **caractérisée en ce que** le réservoir intermédiaire (5) pour le composant principal est soumis à une pression d'admission.

10. Machine selon l'une quelconque des revendications précédentes, **caractérisée en ce que** le réservoir intermédiaire (5) pour le composant principal est réalisé de façon à pouvoir être alimenté en continu.

11. Machine selon l'une quelconque des revendications précédentes, **caractérisée en ce que** le réservoir intermédiaire (5) pour le composant principal est un agrégat du type à piston-cylindre.

12. Machine selon l'une quelconque des revendications précédentes, **caractérisée en ce que** la pompe à engrenages (14) est disposée directement devant l'entrée du mélangeur (16).

13. Machine selon l'une quelconque des revendications précédentes, **caractérisée en ce que** la pompe à piston (14) est disposée directement devant l'entrée du mélangeur (16).

14. Machine selon l'une quelconque des revendications précédentes, **caractérisée en ce que** le réservoir intermédiaire (5) pour le composant principal est disposé directement devant la pompe à engrenages (14).

15. Machine selon l'une quelconque des revendications précédentes, **caractérisée en ce que** la buse (17) est disposée directement après la sortie du mélangeur (16).
